# EUROPEAN PATENT APPLICATION

(11) **EP 2 282 587 A1**
(43) Date of publication of application: **09.02.2011**
(21) Application number: 09305741.2
(22) Date of filing: 07.08.2009
(51) Int. Cl.: H04W 48/18

(54) **method of and apparatus for guiding selection of a network operator for a wireless communication device having access to a plurality of network service providers**

(71) Applicant: FRANCE TELECOM, 75015 Paris (FR)
(72) Inventor: Viot, Cédric, London, W6 0JD (GB)
(74) Representative: Cabinet Plasseraud

(57) **Abstract**

A method of and a network selection guidance module for guiding the selection of a network operator for a wireless communication device having simultaneous communication access to a plurality of mobility service provider networks, the method comprising: storing, on the wireless communication device, service cost data for a plurality of network operators; retrieving connection data representative of the communication about to be established with the wireless communication device; and providing an indication of the network operator providing the lowest potential cost of the communication according to the service cost data corresponding to the mobility service provider networks to which the wireless communication device has access and to the retrieved connection data, enabling the network operator providing the potential lowest communication cost for the intended communication, to be selected.

## Description

### Field of the Invention

The present invention relates in general to a method and apparatus for guiding selection of a network operator for a wireless communication device having access to a plurality of network service providers.

### Background of the Invention

A wireless communication device such as a mobile telephone, PDA (portable digital assistant), portable computer or the like may find itself in a situation where it has access to a plurality of network service providers for establishing a communication. For example, if the wireless communication leaves its home network and roams it may have communication access to a number of different network operators outside its home network depending on its geographical location. The network operators to which the wireless communication device has access may also depend on the home network of the wireless device and/or on the type of contract the wireless communication device has with its home network.

Typically when a wireless communication device leaves its home network and roams, particularly when roaming abroad outside the country of its home network, extra charges are incurred for communications. These charges will depend on the type of communication: for example - voice call, text message; picture message; video message; email, data download; internet access etc. The charges may also depend on the time of the communication, or the day of the week in which the communication is made. For example, lower charges may be incurred at off peak times compared to peak times. In particular, charges will also depend on the destination of the communication - i.e. the geographical location (country or in some cases region) or whether the communication is being established with a fixed or mobile terminal etc. Different service providers have tariffs which may differ from one service provider to another depending on such parameters and also depending on factors like agreements set up with home networks or on particular network offers. For example one network service provider may provide lower costs for internet access services but higher costs for off peak voice calls when compared to another network service provider. This makes it difficult for the user to evaluate communication costs incurred on one network compared to the costs for the same communication on another network. In addition, communication charges will change from country to country resulting in a complicated jungle of tariffs which although may be available to the roaming user do not enable the user to easily identify the best network service provider to select in terms of cost. Moreover, information of communication tariffs is not always readily available to the user in a roaming situation. This leads to difficulties in selecting the best network in terms of cost for a particular communication.

It can often be the case that a network provider is automatically selected by a wireless communication device according to the quality of service provided by the different available networks, for example on the signal strength from the network. Such automatic selection does not always select the best network in terms of cost. Consequently the user may have a more costly communication when in fact he had access to a less expensive network service provider providing sufficient signal strength to establish a reliable communication connection.

Another situation in which a wireless communication device has access to a plurality of service provider networks is if the wireless communication device has contracts with more than one service provider. For example the wireless communication device may be fitted with more than one SIM card, each SIM being attributed to a particular service network provider. The user may thus encounter the problems outlined above when attempting to make a cost based selection of service network provider due to the variation in communication costs between different network service providers.

### Summary of the Invention

To better address one or more of the foregoing concerns, a first aspect of the invention provides a method of guiding the selection of a network operator for a wireless communication device having simultaneous communication access to a plurality of mobility service provider networks, the method comprising: storing, on the wireless communication device, service cost data for a plurality of network operators; retrieving connection data representative of the communication about to be established with the wireless communication device; providing an indication of the network operator providing the lowest potential cost of the communication according to the service cost data corresponding to the mobility service provider networks to which the wireless communication device has access and to the retrieved connection data; enabling the network operator providing the potential lowest communication cost for the intended communication, to be selected.

A second aspect of the invention provides a network selection guidance module for guiding the selection of a network operator for a wireless communication device having simultaneous communication access to a plurality of mobility service provider networks, the module comprising: a memory for storing service cost data for a plurality of network operators; connection data retrieval means for retrieving connection data representative of the communication about to be established with the wireless communication device; and a processor for determining the network operator providing the lowest potential cost of the communication according to the service cost data corresponding to the mobility service provider networks to which the wireless communication device has access and to the retrieved connection data, a selector enabling the network operator providing the potential lowest communication cost for the intended communication, to be selected.

A third aspect of the invention provides a wireless communication device comprising: an antenna and a transceiver for communicating with a network entity; a network advisor module according to any one of the embodiments of the invention, for providing an indication enabling the network operator providing the lowest communication cost for the intended communication, to be selected; and a a display for displaying an indication of the best available network operator.

The plurality of network providers maybe related to networks encountered by the wireless communication device when it is in a roaming situation or may relate to a plurality of home networks with which the user of wireless communication device has subscription contracts.

Accordingly, the user can make an informed choice as to the best network to use in terms of cost. In some embodiments the best network may be automatically indicated to the user, by for example means of a pop up message. In further embodiments the best network in terms of choice for the intended communication may be automatically selected for the wireless communication device. Thus the wireless communication device can be connected to the network best adapted in terms of cost for the particular intended communication and savings in communication costs may be made.

In some embodiments the indication may be provided in the form of an alert message advising the user to change network in order to reduce the potential cost of the communication, or in the form of a list listing the available networks and their corresponding costs related to the intended communication.

In embodiments of the invention the method or the module may include one or more of the following features:
■ retrieving connection data may include intercepting at least part of a number of a correspondent to which communication with the wireless communication device is to be established;
■ the network operator corresponding to the lowest communication costs may be automatically selected;
■ providing an indication may include displaying on a screen of the wireless communication device an indication of the network operator providing the lowest communication costs enabling the user to select the said network operator;
■ providing an indication comprises displaying a list of network operators ranked according to the predicted communication cost enabling the user to select a network operator from the list.
■ the method may further include or the module may be configured for tailoring the service cost data stored on the wireless communication device according to one or more of the following: the intended geographical destinations of the user of the wireless communication device; a limited set of correspondent numbers and typical usage of said wireless communication device
■ the method may further include or the module may be configured for determining the network operator providing the lowest communication costs for the intended communication as a function of one of more of the following: the intended communication duration; the time of day and/or day of the week of the communication; the home network operator of the wireless communication device and the geographical location of the wireless communication device.
■ the method may further include or the module may be configured for updating the service cost data stored on the wireless communication device.
■ the prefix of the number of a correspondent to which communication with the wireless communication device is to be established may be intercepted, and wherein the network operator providing the lowest communication costs for the intended communication is determined as a function of the prefix.
■ the method may further include or the module may be configured for calculating the cost of the communication according to the duration of the established communication, to the service cost data relating to the network provider used to establish the communication and to the communication destination, and further comprising displaying the cost of the call.

The methods according to the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a block diagram indicating some components of a wireless communication device according to at least one embodiment of the invention;
Figure 2 is a schematic diagram of a mobile node having simultaneous access to three network service providers;
Figure 3 is a flow chart illustrating steps of a method of selecting a network service provider according to an embodiment of the invention; and
Figure 4 is an example of a service cost data set stored on the wireless communication device according to an embodiment of the invention

### Detailed description

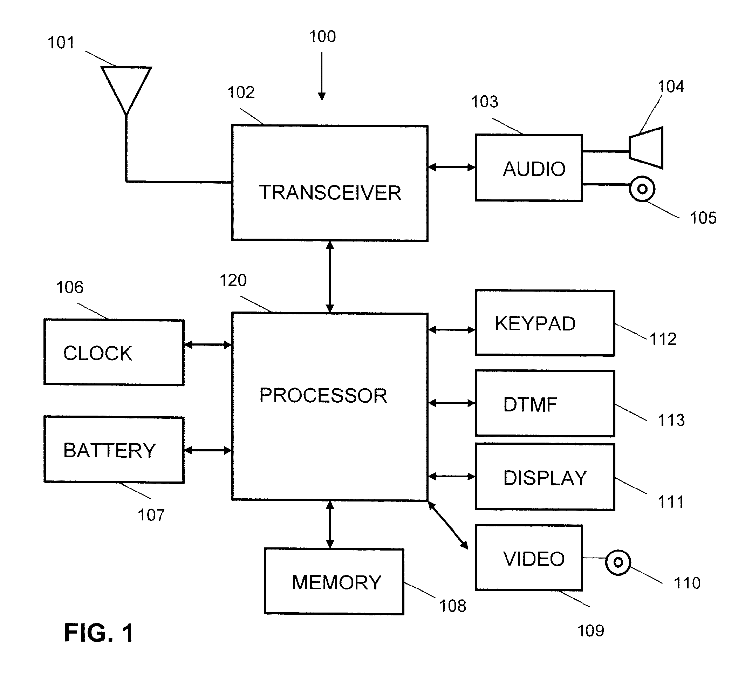

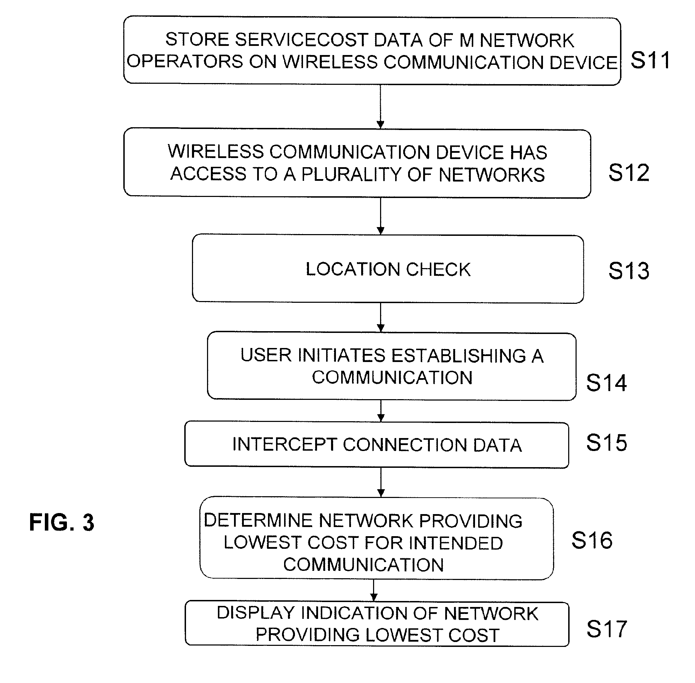

An embodiment of the invention will be described with reference to Figures 1 to 4.

Figure 1 illustrates some of the main components of a non-limiting example of a wireless communication device 100 that may be used in the context of the invention. The wireless communication device 100 comprises conventional circuitry for performing the main functions of a mobile phone and includes one or more antennas 101 and a transceiver unit 102 for the transmission and reception of wireless signals; an audio unit 103 with a speaker 104 and a microphone 105; a clock 106; a battery 107; a memory 108, a video unit 109 with camera 110 for capturing still and/or video images, a display screen 111 for displaying information to the user, a kepypad for receiving a user input 112 and a DTMF (dual tone multi frequency) processing unit 113 and a processor 120. The wireless communication device may include further units such as a GPS unit for indicating the geographical location of the wireless communication device and other such units included in mobile wireless communication devices.

In some embodiments of the wireless communication device the display screen 111 may be a touch sensitive screen and the keypad 112 may be a virtual keypad displayed on the touch sensitive screen. The memory 108 may include one or more memory circuits including non-volatile memory circuits (EEPROM, FLASH etc.)

The wireless communication device 100 may be a mobile telephone or any other mobile terminal providing communication services to its user. Depending on the capabilities of the mobile terminal and the supporting networks the wireless communication device 100 may provide a range of voice and data communication services. As non-limiting examples the illustrated wireless communication device provides network based communication service including voice, multimedia and text messaging, media streaming, data download, web browsing and email services.

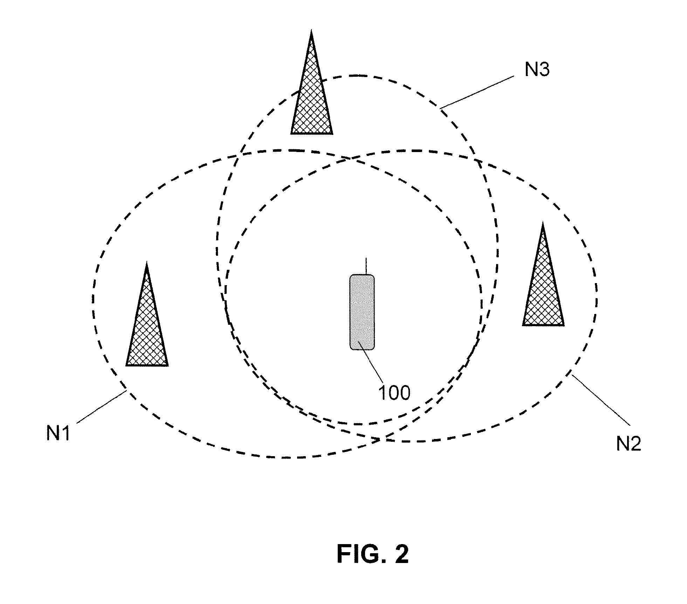

In the non-limiting example illustrated in Figure 2 the wireless communication device 100 is in a roaming situation. For example, the home network HN of the wireless communication device 100 may be in the UK and the user of the wireless communication device 100 has travelled from the UK to France. In France the wireless communication device 100, when activated, has access to three service network providers of networks N1, N2 and N3.

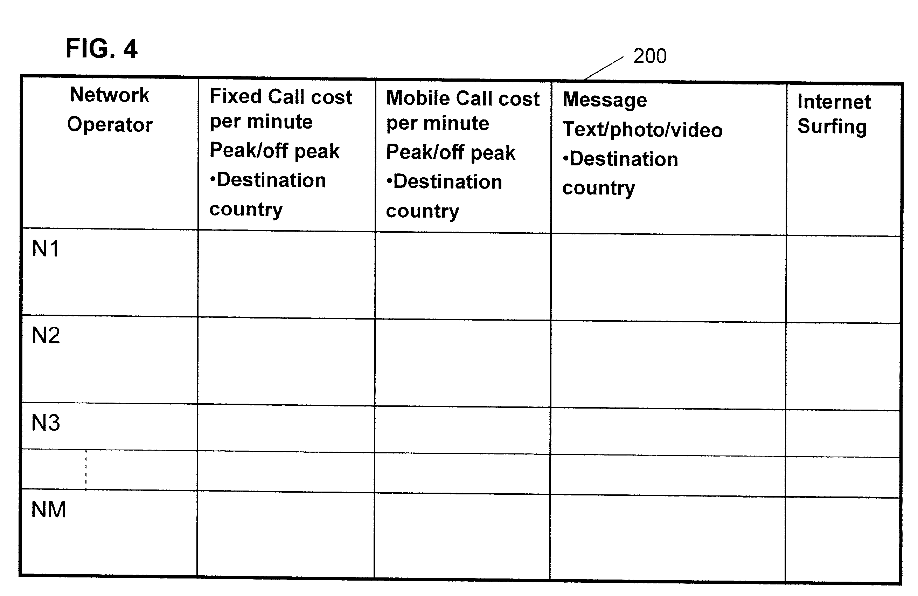

In step S11 of the method of the first embodiment of the invention service cost data relating to a plurality of M different network providers N*1*, N*2*...N*i* to NM is stored in the memory 108 of the wireless communication device 100. An example of a service cost dataset 200 stored in memory 108 is illustrated in Figure 4. The service cost data may include the cost per minute of voice calls at peak and off peak times, with the definition of peak and off peak times in terms of time of day and day of the week being defined for each network operator N*i*. The cost of voice calls to fixed terminals and mobile terminals, and according to country of destination may be provided in the matrix. The service cost dataset may also include the cost of sending text or multimedia messages with cost according to country of destination where applicable. The illustrated exemplary service cost dataset also includes cost data for internet surfing and for sending emails.

The stored dataset may be tailored by the user to a reduced dataset according to the requirements or typical usage of the user. For example, the dataset may only include cost data relating to networks of countries the user is likely to visit or regularly visits. Alternatively or additional the reduced service cost dataset may include costs for the communication the user typically uses, for example, the wireless mobile communication device 100 may not support internet surfing or email sending thereby enabling cost data relating to such communication services to be excluded from the service cost dataset stored in the memory 108. The stored dataset may also be filtered according to call duration. For example, some network providers may have a set price for short duration calls with the cost per minute increasing or decreasing significantly after a certain time period. If the user typically has short or alternatively long calls he may filter the dataset according to include costs relating to a typical call duration. The costs relating to each network operator may depend on whether or not there are roaming agreements set up with the home network of the user and on the negotiated costs according to the roaming agreement in place between the relevant network operators. The roaming agreement may also be subject to the type of subscription under which the wireless communication device 100 operates.

Reducing the size of the dataset is advantageous in that the subsequent processing needed to provide an indication of the most suitable network operator in terms of cost is simplified and shortened leading to less battery consumption for data processing and consequently longer battery life.

In step S12 the wireless communication device 100 has access to a plurality N of networks where N≤M. In the illustrated example of Figure 2 the wireless communication device 100 has access to three networks N1, N2 and N3.

In step S13 of the process the processor 120 performs a location check and detects the wireless communication device 100 is outside its home network HN. In this embodiment the location check may be performed by comparing the detected mobile country code MCC and/or network country code NCC with the home network country code MCCₕₒₘₑ and NCCₕₒₘₑ thereby determining that the wireless communication device 100 has left its home network and determining which networks the wireless communication device 100 has access and thus in which country the wireless is located. It will be appreciated that in alternative embodiments of the invention the location check may be carried out by alternative means, for example by means of providing a geographical location via a GPS unit. The processing module 120 can thereby use the information on the location of the wireless communication device as a filter parameter for the stored service cost dataset so that only the service costs associated relevant network operators need by retrieved for the network determination step.

In step S14 the user of wireless communication device 100 wishes to use a communication service provided by at least some of the available networks N1 to N3 to establish a communication. For example, the user wishes to make a voice call to fixed line in the UK. To do this using the keypad 112 of the wireless communication device 100 he inputs the number of his intended correspondent with whom he wishes to establish the voice communication. Since in this case he wishes to establish a voice communication with the UK the country code prefix of the UK 44 is input. The numbers input after 44 will indicate whether the call is to a fixed line or to a mobile terminal. The destination number is validated by the user and the relevant numbers indicating the destination of the call (i.e. the country and whether the destination is fixed or mobile) are intercepted by the processor 120 in step S15. In some embodiments of the invention the length of the number can be used to determine whether the call is being made to a mobile or fixed number; or the geographical region.

The processing logic at this stage can also determine the type of the intended communication, which in this case is a voice call and thus filter the relevant cost data from the dataset. In other circumstances the user may wish to send a text message or a picture message and would have thus input a text message or selected a picture before initiating the connection which would in either case be detected by the processing logic and used to filter the relevant service cost data.

In step S16 the processor uses the intercepted numbers and the filtered cost data set relating to the operators of networks N1, N2 and N3 to determine which of the networks N1, N2 and N3 should provide the lowest cost for the intended voice call.

In step S17 a pop up menu is displayed on the screen listing networks N1, N2 and N3 and indicating the cost of the call, for example per minute according to each network. The user can then use the pop up menu to select the network providing the lowest cost and then initiate the communication. If the selected network corresponds to a network to which the wireless communication device is already connected then no network switch takes place. If on the other hand a network operator different to the network operator to which the wireless communication device is already connected is selected then the wireless communication device is switched from the original network to the selected network.

In some embodiments of the invention the network incurring the lowest charges for the intended communication may be automatically selected by the processing logic and the wireless communication device automatically switched to this network without further input to the user and/or without displaying an indication of the lowest cost network. In other embodiments, rather than displaying a list of network providers and their associated costs for the intended call, the cheapest network provider for the intended communication may simply be displayed and the user prompted to switch to this network for a lower cost communication. In some cases the indication of the network operator providing the lowest cost for the intended communication may be provided in the form of an alert message alerting the user to change to another network in order to obtain a lower cost communication.

The service cost data can also be used to determine the cost of the communication when the communication has been established. In relation to the present example since the processing logic has access to the cost per minute of the call to the country and the type of terminal for the selected network the cost of the communication can be calculated by measuring the time of the call and multiplying the time of the call in minutes by the cost per minute for the selected network for that type of call. In this way the cost of the call can be displayed to the user. The cost may be displayed in real time so that the user is informed of the cost of the call during the call or the cost of the call may be displayed on the display screen 111 of the wireless communication device 100 when the call is terminated. The cost of the call may be given as an absolute value of the call cost or in the case of a prepaid account the remaining balance may be displayed thereby allowing the caller to terminate the call quickly if necessary. If the call is longer than anticipated the processing logic may also be configured in some embodiments of the invention to indicate to the user that he would be better changing to another network providing lower costs for longer call durations.

Moreover in some embodiments of the invention during a communication the processing logic may be configured to detect the presence of new networks with which the wireless communication device has come into contact with since initiating the communication. The processing logic can thus determine if the new networks would provide a cheaper communication cost and alert the user to change network for a lower cost communication.

The dataset stored n the memory 108 of the wireless communication device may be updated regularly. For example the tariffs of roaming costs of networks may be updated yearly and according the dataset stored on the wireless communication device can be updated to take into account changes in costs. New networks may be added. The updating of the service cost data may be done via the network operators or by downloading data via the internet for example.

Moreover the user can tailor the dataset as and when he wishes taking into account changes in his communication habits or visited countries. The user for example knowing he will be visiting a country whose network service costs data are not included in his customized service cost dataset may add the networks relevant to this country to his customized service cost dataset.

The methods according to the embodiments of the invention enable a network provider providing the lowest costs for the intended communication to be selected in a simplistic manner enabling the user to make savings in terms of costs for communications.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to a voice call as a communication it will be understood that in other embodiments the communication may be the transmission of a text message, a multimedia message, access to the internet, an email communication or a data download. In each case the processing logic determines the type of communication and where relevant the destination of the communication in order to determine the optimal network operator in terms of cost for the communication.

In some embodiments of the invention the user may indicate the intended duration of the communication in order that this parameter may be taken into account when determining the optimal network operator in terms of cost for the communication.

Moreover while the foregoing examples have been described in relation to a wireless communication in a roaming situation it will be appreciated that another situation in which a wireless communication device may have access to a plurality of service provider networks is if the wireless communication device has contracts with more than one national service provider. For example the wireless communication device may be fitted with more than one SIM card, each SIM being attributed to a particular service network provider. The processing logic may be configured thus to determine which network provider would provide the lowest cost for an intended communication depending on the type of communication to be made and/or the destination of the communication (country, mobile or fixed etc) in the same way as set out in the example above for the roaming situation.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of guiding the selection of a network operator for a wireless communication device having simultaneous communication access to a plurality of mobility service provider networks, the method comprising:
storing, on the wireless communication device, service cost data for a plurality of network operators;
retrieving connection data representative of the communication about to be established with the wireless communication device;
providing an indication of the network operator providing the lowest potential cost of the communication according to the service cost data corresponding to the mobility service provider networks to which the wireless communication device has access and to the retrieved connection data; and
enabling the network operator providing the potential lowest communication cost for the intended communication, to be selected.

2. A method according to claim 1, wherein the step of retrieving connection data comprises intercepting at least part of a number of a correspondent to which communication with the wireless communication device is to be established.

3. A method according to claim 1 or 2 further comprising tailoring the service cost data stored on the wireless communication device according to one or more of the following: the intended geographical destinations of the user of the wireless communication device; a limited set of correspondent numbers and typical usage of said wireless communication device

4. A method according to any one of the preceding claims further comprising determining the network operator providing the lowest communication costs for the intended communication as a function of one of more of the following: the intended communication duration; the time of day and/or day of the week of the communication; the home network operator of the wireless communication device and the geographical location of the wireless communication device.

5. A method according to any one of the preceding claims wherein the prefix of the number of a correspondent to which communication with the wireless communication device is to be established is intercepted, and wherein the network operator providing the lowest communication costs for the intended communication is determined as a function of the prefix.

6. A method according to a any one of the preceding claims further comprising calculating the cost of the communication according to the duration of the established communication, to the service cost data relating to the network provider used to establish the communication and to the communication destination, and further comprising displaying the cost of the call.

7. A network selection guidance module for guiding the selection of a network operator for a wireless communication device having simultaneous communication access to a plurality of mobility service provider networks, the module comprising:
a memory for storing service cost data for a plurality of network operators;
connection data retrieval means for retrieving connection data representative of the communication about to be established with the wireless communication device; and
a processor for determining the network operator providing the lowest potential cost of the communication according to the service cost data corresponding to the mobility service provider networks to which the wireless communication device has access and to the retrieved connection data,
a selector enabling the network operator providing the potential lowest communication cost for the intended communication, to be selected.

8. A module according to claim 7, wherein the connection data retrieval means is configured to intercept at least part of a number of a correspondent to which communication with the wireless communication device is to be established.

9. A module according to claim 7 or 8, further comprising data manipulation means for tailoring the service cost data stored on the wireless communication device according to one or more of the following: the intended geographical destinations of the user of the wireless communication device; a limited set of correspondent numbers and typical usage of said wireless communication device

10. A module according to any one of claims 7 to 9, wherein the processor is configured to determine the network operator providing the lowest communication costs for the intended communication as a function of one of more of the following:
the intended communication duration; the time of day and/or day of the week of the communication; the home network operator of the wireless communication device and the geographical location of the wireless communication device.

11. A module according to any one of claims 7 to 10, further comprising data update means for updating the service cost data stored on the wireless communication device.

12. A module according to any one of claims 7 to 11, wherein the connection data retrieval means is configured to intercept the prefix of the number of a correspondent to which communication with the wireless communication device is to be established, and wherein the processor is configured to determine the network operator providing the lowest communication costs for the intended communication as a function of the prefix.

13. A module according to any one of claims 7 to 12, wherein the processor is configured to calculate the cost of the communication according to the duration of the established communication, to the service cost data relating to the network provider used to establish the communication and to the communication destination, and to display the cost of the call.

14. A wireless communication device comprising:
an antenna and a transceiver for communicating with a network entity;
a network advisor module according to any one of claims 7 to 13, for providing an indication enabling the network operator providing the lowest communication cost for the intended communication, to be selected; and a a display for displaying an indication of the best available network operator.

15. A computer-readable medium having computer-executable instructions to enable a computer system to perform the method of any one of claims 1 to 6.
